(19) Europäisches Patentamt
European Patent Office
Office européen des brevets

(11) **EP 3 187 600 B1**

(12) **EUROPEAN PATENT SPECIFICATION**

(45) Date of publication and mention
of the grant of the patent:
**20.11.2019 Bulletin 2019/47**

(21) Application number: **15827205.4**

(22) Date of filing: **03.08.2015**

(51) Int Cl.:
*C21D 9/02* (2006.01)   *C21D 1/06* (2006.01)
*C21D 7/06* (2006.01)   *C22C 38/00* (2006.01)
*C22C 38/58* (2006.01)   *C23C 8/26* (2006.01)
*C22C 38/04* (2006.01)   *C21D 8/06* (2006.01)
*C22C 38/02* (2006.01)   *C22C 38/44* (2006.01)
*F16F 1/02* (2006.01)   *F16F 1/06* (2006.01)
*B21F 3/02* (2006.01)   *B21C 1/00* (2006.01)

(86) International application number:
**PCT/JP2015/071999**

(87) International publication number:
**WO 2016/017823 (04.02.2016 Gazette 2016/05)**

(54) **STAINLESS-STEEL-SPRING PRODUCTION METHOD**

EDELSTAHLFEDERHERSTELLUNGSVERFAHREN

PROCÉDÉ DE PRODUCTION DE RESSORT EN ACIER INOXYDABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.08.2014 JP 2014157899**

(43) Date of publication of application:
**05.07.2017 Bulletin 2017/27**

(73) Proprietors:
• **NHK SPRING CO., LTD.**
**Yokohama-shi, Kanagawa 236-0004 (JP)**
• **SUZUKI-SUMIDEN STAINLESS STEEL WIRE CO.,
LTD.**
**Chiyoda-ku**
**Tokyo**
**Tokyo 100-0005 (JP)**

(72) Inventors:
• **KANEYASU, Mitsutoshi**
**Kamiina-gun**
**Nagano 399-4301 (JP)**
• **SUDO, Toshiaki**
**Kamiina-gun**
**Nagano 399-4301 (JP)**
• **KANNO, Fumito**
**Narashino city**
**Chiba 275-0001 (JP)**
• **ENOKIDA, Hiroyuki**
**Narashino city**
**Chiba 275-0001 (JP)**

(74) Representative: **DREISS Patentanwälte PartG
mbB**
**Friedrichstraße 6**
**70174 Stuttgart (DE)**

(56) References cited:
**EP-A1- 1 619 264     EP-A1- 1 992 712
JP-A- 2003 226 940     JP-A- 2007 224 366
JP-A- 2014 055 343     JP-B2- 3 746 877**

**Description**

Technical Field

The present invention relates to a stainless steel spring manufacturing method. In particular, for example, the present disclosure relates to a stainless steel spring used for a valve spring employed as a return mechanism in an air intake or exhaust valve in a diesel engine, a plunger spring employed as a return mechanism of a pressurizing piston in a fuel injection pump of a diesel engine, or the like, and also relates to a manufacturing method of the stainless steel spring.

Background Art

Hitherto, steel springs with high fatigue strength have been demanded in, for example, valve springs employed as return mechanisms in air intake or exhaust valves in diesel engines, plunger springs employed as return mechanisms in pressurizing pistons in fuel injection pumps, and the like.

In order to achieve steel springs with high fatigue strength, silicon-chromium steel oil-tempered wire (SWOSC-V) is often employed as a wire material. Silicon-chromium steel oil-tempered wire (SWOSC-V) is a steel material, and does not have high corrosion resistance. Accordingly, steel springs such as valve springs of air intake and exhaust valves, which operate in corrosive environments lubricated by lubricating oil in which a sulfur component is incorporated, sometimes suffer surface corrosion due to the sulfur component in the lubricating oil. Moreover, steel springs such as plunger springs for fuel injection pumps, which operate in environments lubricated by fuel rather than a lubricating oil in order to produce cleaner exhaust gas, also sometimes suffer surface corrosion due to moisture contained in the fuel.

Coating the entire surface of the steel spring is a known as a corrosion prevention method for steel springs. However, performing such coating sometimes leads to higher costs, and coating that has peeled off during operation of the steel spring can clog lubricating oil filters, fuel filters, and the like.

Steel springs in which stainless steel is employed as a wire material with high corrosion resistance are known. However, stainless steel wire has lower fatigue strength than SWOSC-V When using stainless steel wire, in order to achieve the fatigue strength demanded of the steel spring, it is necessary to use stainless steel wire having a larger size than SWOSC-V, thereby increasing the weight and size of the steel spring. Accordingly, due to layout considerations, it is currently difficult to implement steel springs in which stainless steel wire is employed in diesel engines or fuel injection pumps.

However, the "Super Dolce", manufactured by Sumitomo (SEI) Steel Wire Corp. is a known as stainless steel wire with high fatigue strength, in which the strength is increased by the addition of N and Mo to SUS304 (see Cited Documents 1 -3).

Moreover, as technology for processing and manufacturing a high strength steel spring using such stainless steel wire, there is "a method of manufacturing a high strength stainless steel spring, including a process of coiling a stainless steel wire to form a spring form, a process of annealing the spring formed stainless steel wire at a temperature of from 425°C to 600°C, a process of nitriding the spring formed stainless steel wire, and a process of shot peening the spring formed stainless steel wire (see Cited Document 4)".

Moreover, as a manufacturing method of a high strength stainless steel wire, there are "a stainless steel wire manufacturing method including: a first wire drawing process of drawing an austenitic stainless steel wire material containing 0.04% by weight or greater of C at a processing temperature of 150°C or lower, at a degree of drawing of from 60% to 90%; a heat treatment process of heat treatment for the drawn wire material at from 600°C to 900°C to configure an average austenite grain diameter of from 1 $\mu$m to 3 $\mu$m after the heat treatment; and a second wire drawing process of drawing the heat treated wire material at a processing temperature of 150°C or lower at a degree of drawing of 50% or greater so as to configure steel wire having a tensile strength of 1500 N/mm$^2$ or greater (see Cited Document 6)", and "a manufacturing method for a stainless steel wire in which a steel wire having a specific composition is heated to a warm region of from 70°C to 400°C and drawn to give a total cross-section reduction ratio of from 40% to 95% (see Cited Document 7)".

As technology for processing and manufacturing a high strength steel spring, there is "a high fatigue strength stainless spring manufacturing method including performing cold coiling and low temperature annealing on a stainless steel wire, then performing surface activation by shot peening, gas nitriding, and then applying surface layer compressive stress by shot peening (see Cited Document 8)".

Cited Document 1:    Japanese Patent No. 3975019
Cited Document 2:    Japanese Patent No. 4080321
Cited Document 3:    Japanese Patent No. 4245457

Cited Document 4:     Japanese Patent Application Laid-Open (JP-A) No. 2007-224366
Cited Document 6:     JP-A No. 2003-231919
Cited Document 7:     Japanese Patent No. 4519513
Cited Document 8:     JP-ANo. H08-281363;

Features related to the subject-matter of claim 1 are known from EP 1 992 712 A1 and EP 1 619 264 A1.

SUMMARY OF INVENTION

However, similarly to steel springs in which SUS631J1WPC is employed, these strengthened steel springs in which stainless steel wire is employed are inferior to steel springs in which SWOSC-V is employed in terms of fatigue strength. Accordingly, there are currently limitations to weight reduction and size reduction in diesel engines, fuel injection pumps, and the like when using steel springs in which stainless steel wire is employed.

Accordingly, an object of the present invention is to provide a stainless steel spring that has excellent corrosion resistance and excellent fatigue strength, through a manufacturing method for the stainless steel spring.

Solution to Problem

The object is addressed by claim 1.

Advantageous Effects of Invention

The present invention is capable of providing a stainless steel spring that has excellent corrosion resistance and excellent fatigue strength, through a manufacturing method for the stainless steel spring.

BRIEF DESCRIPTION OF DRAWINGS

Fig. 1 is a graph illustrating fatigue testing results for $10^7$ repetitions (withstand times) for Example 1.
Fig. 2 is a graph illustrating fatigue testing results for $10^8$ repetitions (withstand times) for Example 1.
Fig. 3 is a graph illustrating warm clamp testing results for Example 1.
Fig. 4 is a graph illustrating a relationship between heat processing temperature and tensile strength for Example 1.
Fig. 5 is a graph illustrating fatigue testing results for Example 2.
Fig. 6 is a graph illustrating a relationship between nitride layer thickness and surface hardness for Example 3.
Fig. 7 is a graph illustrating fatigue testing results for Example 4.

DESCRIPTION OF EMBODIMENTS

Detailed explanation follows regarding a stainless steel spring of the present invention. Note that the detailed explanation regarding the stainless steel spring of the present invention is based on the manufacturing method of the stainless steel spring.

A manufacturing method of a stainless steel spring of the present invention (also referred to below as the "steel spring") includes: a process of drawing a steel wire (referred to below as the "wire drawing process"); a process of forming the drawn steel wire to obtain a coiled steel wire (referred to below as the "steel wire forming process"); a process of heat treatment for the coiled steel wire (referred to below as the "first heat treatment process"); a process of nitriding the heat treated coiled steel wire (referred to below as the "nitriding process"); a process of shot peening the nitrided coiled steel wire (referred to as the "shot peening process"); and a process of heat treatment for the shot peened coiled steel wire (referred to below as the "second heat treatment process").

Namely, the steel spring of the present invention is a steel spring obtained by going through the above processes. The steel spring of the present invention, obtained by going through the respective processes described in detail below, has excellent corrosion resistance and excellent fatigue strength. More specifically, for example, the steel spring of the present invention has corrosion resistance, and has excellent fatigue strength equivalent to or surpassing that of a steel spring in which SWOSC-V is employed.

Moreover, the steel spring of the present invention has excellent high temperature sagging resistance characteristics, and load loss under the same operation environment is suppressed in comparison to steel springs in which SWOSC-V is employed.

Accordingly, the steel spring of the present invention enables a reduction in weight and a reduction in size while being resistant to corrosion, and can thereby contribute to a reduction in weight and reduction in size of diesel engines, fuel injection pumps, and the like.

Detailed explanation follows regarding the processes.

Wire Drawing Process

The wire drawing process involves drawing a steel wire containing, in percentage by mass, C in an amount of 0.04 to 0.08%, Si in an amount of 0.3% to 2.0%, Mn in an amount of 0.5 to 3.0%, Ni in an amount of 8.0% to 10.5%, Cr in an amount of 16.0% to 22.0%, Mo in an amount of 0.5% to 3.0%, and N in an amount of 0.15% to 0.23%, with a remainder being made up of Fe and impurities, with a degree of drawing $\varepsilon$ satisfying Equation (1) below.

Note that the steel wire to be drawn is a stainless steel wire in which Mo and N are added to the components of SUS304 for solid solution strengthening. Explanation follows regarding the reasoning behind the selection of the respective elements configuring the steel wire and the limitations to their respective content.

C: 0.04 to 0.08%

C has the advantageous effect in terms of entering the crystal lattice and strengthening by introducing distortion. Moreover, C has the advantageous effect in terms of improving strength by forming a Cottrell atmosphere and pinning dislocations in the metal structure. However, C has a tendency to combine with Cr and the like in the steel so as to form carbides. For example, if Cr carbide is present in crystal grain boundaries, a tendency toward reduced toughness and corrosion resistance arises since Cr has a low dispersion speed in austenite, and a Cr-poor layer develops around the grain boundaries.

Accordingly, from the perspective of suppressing deterioration in toughness and corrosion resistance, the C content is set to 0.08% by mass or lower. Moreover, from the perspectives of improving strength as well as suppressing deterioration in toughness and corrosion resistance, the C content is from 0.04% by mass to 0.08% by mass.

Si: 0.3% to 2.0%

Si has the advantageous effect in terms of lowering stacking-fault energy and improving mechanical characteristics by forming a solid solution. Moreover, Si is an effective deoxidizing agent during melting and refining. Austenitic stainless steel usually includes Si in approximately 0.6% by mass to 0.7% by mass. However, high Si content has a tendency to be detrimental to toughness.

Accordingly, from the perspectives of suppressing deterioration in toughness and also obtaining the mechanical characteristics by solid solution strengthening, the Si content is from 0.3% by mass to 2.0% by mass, and is more preferably from 0.9% by mass to 1.3% by mass.

Mn: 0.5 to 3.0%

Mn functions as a deoxidizing agent during melting and refining. Moreover, Mn is effective in phase stabilization of the $\gamma$ phase (austenite) in austenitic stainless, and can be used as a substitute element for Ni, which is expensive. Moreover, Mn has the advantageous effect in terms of increasing the solid-solubility limit of N in austenite. However, high Mn content has a tendency to be detrimental to oxidation resistance properties at high temperatures.

Accordingly, from the perspective of oxidation resistance properties, the Mn content is from 0.5% by mass to 3.0% by mass. Moreover, from the perspective of phase stability of the $\gamma$ phase (austenite), as well as raising the solid-solubility limit of N, thereby reducing N micro blowholes, the Mn content is preferably from 0.5% by mass to 2.0% by mass.

Ni: 8.0% to 10.5%

Ni is effective in stabilizing the $\gamma$ phase (austenite). However, high Ni content is a cause of blowhole occurrence.

Accordingly, from the perspectives of stabilizing the $\gamma$ phase (austenite), suppressing blowholes, and suppressing an increase in costs, the Ni content is set to from 8.0% by mass to 10.5% by mass. Moreover, from the same perspectives, the Ni content is more preferably from 8.0% by mass to 10.0% by mass.

Note that Ni, in the case of a content of 10.5% by mass or lower, is able to readily form a solid solution of N, particularly in the melting and casting processes, therefore, due to inclusion of N, keeping the usage amount of the Ni, which is an expensive element, as small as possible has great merit in terms of cost.

Cr: 16.0% to 22.0%

Cr is a principle configuration element of austenitic stainless, and is an element effective in order to obtain heat resistance characteristics and oxidation resistance properties. However, high Cr content has a tendency to be detrimental to toughness.

Accordingly, from the perspectives of stability of the $\gamma$ phase (austenite), heat resistance characteristics, oxidation resistance properties, and toughness, the Cr content is set to from 16.0% by mass to 22.0% by mass. The Cr content is more preferably from 18.0% by mass to 20.0% by mass.

Mo: 0.5% to 3.0%

Mo forms a substitutional solid solution in the $\gamma$ phase (austenite), and significantly contributes to improving strength and securing corrosion resistance. Moreover, Mo is capable of forming clusters with N, thereby obtaining a large increase in strength. However, high Mo content has a tendency to be detrimental to processability, and also increases raw material costs.

Accordingly, from the perspectives of strength improvement, processability, and raw material costs, the Mo content is set to from 0.5% by mass to 3.0% by mass. The Mo content is more preferably from 0.5% by mass to 1.0% by mass.

N: 0.15% to 0.23%

N, similarly to C, is an element that enters and performs solid solution strengthening, and is an element that forms a Cottrell atmosphere. Moreover, N has the advantageous effect in terms of raising strength by forming clusters with the Cr and the Mo in the steel. The advantageous effect in terms of improving strength by forming clusters is obtained by aging. However, high N content causes blowhole occurrence during melting or casting. This phenomenon can be suppressed to some extent by adding an element having a high degree of affinity with N, for example Cr or Mn, thereby raising the solid-solubility limit. However, excessive addition thereof could necessitate atmospheric control of, for example, the temperature during melting, which potentially leads to an increase in costs.

Accordingly, from the perspectives of stability of the austenite phase by including N, raising strength by cluster formation, blowhole reduction, and the difficulty level of melting and casting, the N content is set to from 0.15% by mass to 0.23% by mass. The N content is more preferably from 0.19% by mass to 0.22% by mass.

Impurities

Impurities are elements other than Fe and the component elements described above, and are elements unintentionally contained in the raw material of the steel wire, and elements unintentionally incorporated into the steel wire during the manufacturing process.

Note that when melting manufacturing the steel configured by the elements described above, the metal structure of the steel is substantially single-phase austenite, and a passive layer having a principle component of Cr oxide is formed on the surface of the steel wire. The passive layer is extremely thin and uniform, and has a dense structure, thereby serving a very important role in developing the corrosion resistance of the steel wire. Moreover, the passive layer also serves a very important role in giving the steel wire an attractive appearance (metallic sheen).

Next, detailed explanation follows regarding wire drawing.

The wire drawing is performed to a steel wire with the specific composition described above at a degree of drawing $\varepsilon$ satisfying Equation (1) below. The fatigue strength of the steel spring is improved by drawing the steel wire with the specific composition described above such that a degree of drawing $\varepsilon$ satisfies the following Equation (1).

Equation (1):

$$-0.79 \times Ln\,(d1) + 2.36 \leq \varepsilon \leq -0.79 \times Ln\,(d1) + 2.66$$

In Equation (1), $\varepsilon$ is the degree of drawing, which is equal to Ln (d) $\times$ 2. Ln is a natural logarithm. d is d0 / d1 . d0 is a wire diameter of the steel wire prior to drawing. d1 is a wire diameter of the steel wire after drawing.

In Equation (1), d1 is in a range of from 2.00 mm to 5.00 mm from the perspective of improving the fatigue strength of the steel spring.

Note that the wire diameter d0 and the wire diameter d1 are diameters of the steel wire, respectively. If the steel wire has a profile other than a true circle, the wire diameter d0 and the wire diameter d1 are average values taken for the maximum diameter and the minimum diameter, respectively.

The wire drawing is preferably, for example, cold wire drawing performed at room temperature. The wire drawing may, for example, employ a wire drawing method using rollers, dies, or the like, but from the perspective of precision, a wire drawing method using dies is preferably employed.

Note that the wire drawing may be performed once, or plural times, as long as the degree of drawing ε satisfies Equation (1).

Steel Wire Forming Process

The steel wire forming process is a process of forming the drawn steel wire to obtain a coiled steel wire. The steel wire forming is preferably, for example, cold forming performed at room temperature. The steel wire forming employs, for example, a method employing spring forming machine (coiling machine), or a method employing a mandrel.

First Heat Treatment Process

The first heat treatment process is a process of heat treatment for the coiled steel wire at a temperature of from 500°C to 600°C, for a duration of from 20 minutes to 40 minutes. The first heat treatment process relieves processing strain, and promotes age hardening, thereby raising the tensile strength of the steel wire and improving the fatigue strength of the steel spring.

In the first heat treatment process, the heat treatment temperature is in a range of from 500°C to 600°C, and is preferably in a range of from 530°C to 570°C, from the perspective of sufficiently relieving processing strain, achieving sufficient age hardening, and improving the fatigue strength of the steel spring.

The heat treatment duration is set in a range of from 20 minutes to 40 minutes, and is preferably in a range of from 30 minutes to 40 minutes, from the perspective of sufficiently relieving processing strain, achieving sufficient age hardening, and improving the fatigue strength of the steel spring.

Note that in the first heat treatment process, after heat treatment, the coiled steel wire is, for example, cooled naturally.

Note that after the first heat treatment process and before the nitriding process, a spring end grinding process may be applied as needed. The spring end grinding process is a process to grind down both end faces of the coiled steel wire (spring) so as to form flat faces perpendicular to the axial center of the coiled steel wire (spring).

Nitriding Process

The nitriding process is a process of nitriding the coiled steel wire that has been subjected to the first heat treatment, to form a nitride layer with a thickness of from 40 μm to 60 μm on the surface of the coiled steel wire. The nitriding process improves the fatigue strength of the steel spring. The nitriding process also improves the corrosion resistance of the steel spring.

In the nitriding process, the thickness of the nitride layer is in a range of from 40 μm to 60 μm from the perspective of improving the corrosion resistance and the fatigue strength of the steel spring, and is preferably from 45 μm to 55 μm from the perspective of improving the corrosion resistance of the steel spring.

Note that the thickness of the nitride layer is measured in accordance with the following method. A water-cooled high precision cutter cuts along the coil vertical cross-section direction, followed by embedding in a polishing resin and carrying out mirror polishing. Electron Probe Microanalyzer (EPMA) analysis is then performed using an electron beam probe microanalyzer. The depth of a nitrogen diffusion layer is measured by line analysis in accordance with a calibration curve method with standard samples.

The nitriding process is, for example, performed under conditions of an atmosphere of a nitrogen-containing gas such as ammonia, a temperature of from 400°C to 500°C, and a duration of 30 minutes to 120 minutes.

Shot Peening Process

The shot peening process is a process of shot peening the coiled steel wire that has been nitrided. The surface of the steel wire is imparted with compressive residual stress by the shot peening process, thereby improving the fatigue strength of the steel spring.

In the shot peening process, metal particles (shot) such as cut wire or steel balls are launched such that the metal particles impact the surface of the coiled steel wire. The compressive residual stress imparted in the shot peening process is regulated by the equivalent spherical diameter of the metal particles (shot), launch speed, launch time, and by launching employing a multi-stage method.

In the shot peening process, from the perspective of imparting the surface of the steel wire with compressive residual stress, and improving fatigue strength of the steel spring , the shot peening process is performed in multiple stages (preferably in two to three stages, and more preferably in three stages).

From the perspective of improving the fatigue strength of the steel spring, in the multi-stage shot peening process, it is preferable for an arc height value to be smaller in later stages of the shot peening process than in earlier stages of the shot peening process.

Note that the arc height value is a value of the measured warp amount (unit: mm) of a test sample after subjecting a test sample configured by a special steel strip formed in a specific form to shot peening. The arc height value is measured using a piece A, based on "Operational Standards for Shot Peening", published by the Japan Spring Manufacturers Association.

When multi-stage shot peening is performed, heat treatment may be performed after each stage of the shot peening process.

Second Heat Treatment Process

The second heat treatment process is a process of heat treatment for the coiled steel wire that has been subjected to shot peening. The second heat treatment process relieves slight processing strain caused by the shot peening, and improves the fatigue strength of the steel spring.

In the second heat treatment process, the heat treatment temperature is in a range of from 200°C to 250°C, from the perspectives of achieving sufficient processing strain relief, and improving the fatigue strength of the steel spring.

The duration of the heat treatment is in a range of from 10 minutes to 20 minutes, from the perspective of achieving sufficient processing strain relief, and improving the fatigue strength of the steel spring.

Note that in the second heat treatment process, after the heat treatment, the coiled steel wire is, for example, cooled naturally.

Examples

Explanation follows regarding Examples of the present invention. However, the present invention is in no way limited by these Examples.

Example 1

Steel wire No. 1 having a wire diameter of 7.0 mm and the composition shown in Table 1, and obtained by performing melting and casting, forging, hot rolling, wire drawing, and heat treatment, was subjected to the following processing to manufacture steel spring No. 1.

Table 1

| | Component (% by mass) | | | | | | |
|---|---|---|---|---|---|---|---|
| | C | Si | Mn | Ni | Cr | Mo | N |
| Steel wire No. 1 | 0.07 | 0.97 | 1.73 | 9.51 | 18.81 | 0.83 | 0.20 |

First, the steel wire was drawn using dies at a degree of drawing $\varepsilon$ = 1.7, to obtain a steel wire having a wire diameter of 3.00 mm.

Next, a coiling machine was used to cold-form the drawn steel wire to obtain a coiled steel wire.

Next, the coiled steel wire was subjected to heat treatment at a temperature of 550°C for a duration of 30 minutes. The coiled steel wire then cooled slowly in air. Then, both end faces of the coiled steel wire (spring) were ground so as to form flat faces perpendicular to the axial center of the steel wire (spring).

Next, the heat treated coiled steel wire was nitrided in an atmosphere of ammonia gas, at a temperature of 450°C, and for a duration of 90 minutes, to form a nitride layer having a thickness of 45 $\mu$m on the surface of the coiled steel wire.

Next, the nitride coiled steel wire was subjected to three-stage shot peening under the conditions shown in Table 2.

Table 2

| Shot peening process condition | First stage | Second stage | Third stage |
|---|---|---|---|
| Arc height value (mmA) | 0.5 | 0.4 | 0.15 |

(continued)

| Shot peening process condition | First stage | Second stage | Third stage |
|---|---|---|---|
| Coverage (%) | 100 | 100 | 100 |
| Shot form | Cut wire | Cut wire | Cut wire |
| Shot equivalent spherical diameter (mm) | 0.7 | 0.3 | 0.1 |
| Processing duration (minutes) | 30 | 30 | 30 |

Next, the shot peened coiled steel wire was heat treated at a temperature of 230°C for a duration of 10 minutes.

Steel spring (1-1) having the spring specifications shown in Table 3 was obtained by going through the above processes.

Table 3

| Spring specification | |
|---|---|
| Wire diameter | 3.00 mm |
| Average coil diameter | 11.75 mm |
| Number of turns | 6.45 |
| Free length | 31.1 mm |
| Spring constant | 98.2 N/mm |

Fatigue Testing

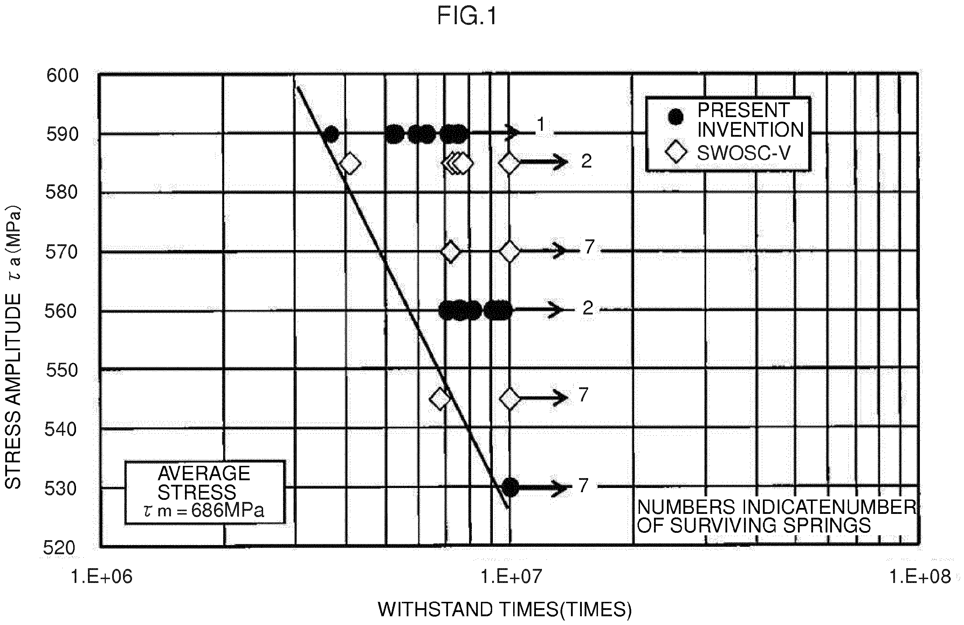

The obtained steel spring (1-1) was fatigue tested using a fatigue testing machine. The fatigue tests were performed for a test number of eight, keeping an average stress $\tau m$ at a constant 686 MPa and varying a stress amplitude $\tau a$. The number of repetitions (withstand times) was $10^7$. A steel spring prepared using SWOSC-V, having the same spring specifications as the steel spring (1-1), was similarly subjected to fatigue testing. The results are illustrated in Fig. 1. Note that in Fig. 1, the steel spring (1-1) is labeled "present invention", and the spring prepared using SWOSC-V is labeled "SWOSC-V".

In the fatigue testing results illustrated in Fig. 1, the fatigue limit (stress amplitude $\tau a$) at which the steel spring (1-1) (present invention) was still unbroken at $10^7$ repetitions (withstand times) was 530 MPa. Namely, the stress amplitude without breaking was 686 $\pm$ 530 MPa at $10^7$ repetitions (withstand times). It can be found that the steel spring (1-1) (present invention) have a stress amplitude without breaking at $10^7$ repetitions (withstand times) equivalent to or greater than that of the steel spring prepared using SWOSC-V (comparative example).

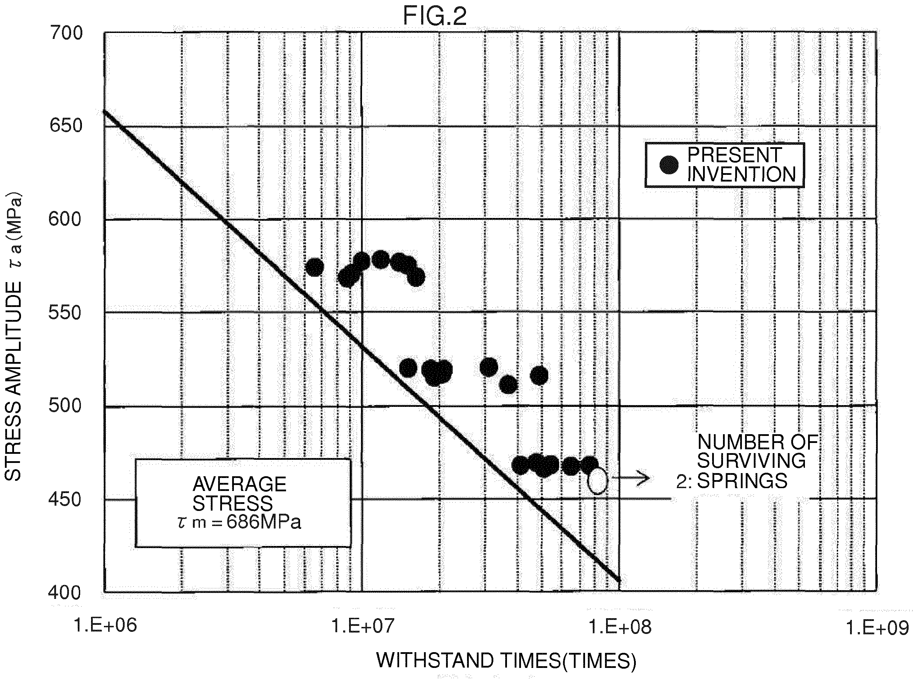

The obtained steel spring (1-1) was also fatigue tested under the same condition, except that the number of repetitions (withstand times) was set to $10^8$. The results are illustrated in Fig. 2. Note that in Fig. 2, the steel spring (1-1) is labeled "present invention".

In the fatigue testing results illustrated in Fig. 2, the fatigue limit (stress amplitude $\tau a$) at which the steel spring (1-1) (present invention) was still unbroken at $5 \times 10^7$ repetitions (withstand times) was 450 MPa.

Accordingly, it can be found that the steel spring of the present invention has a fatigue strength of a stress amplitude without breaking of 686 $\pm$ 530 MPa or greater for $10^7$ repetitions, and has fatigue strength equivalent to or greater than that of the steel spring prepared using SWOSC-V (comparative example).

Clamp Testing

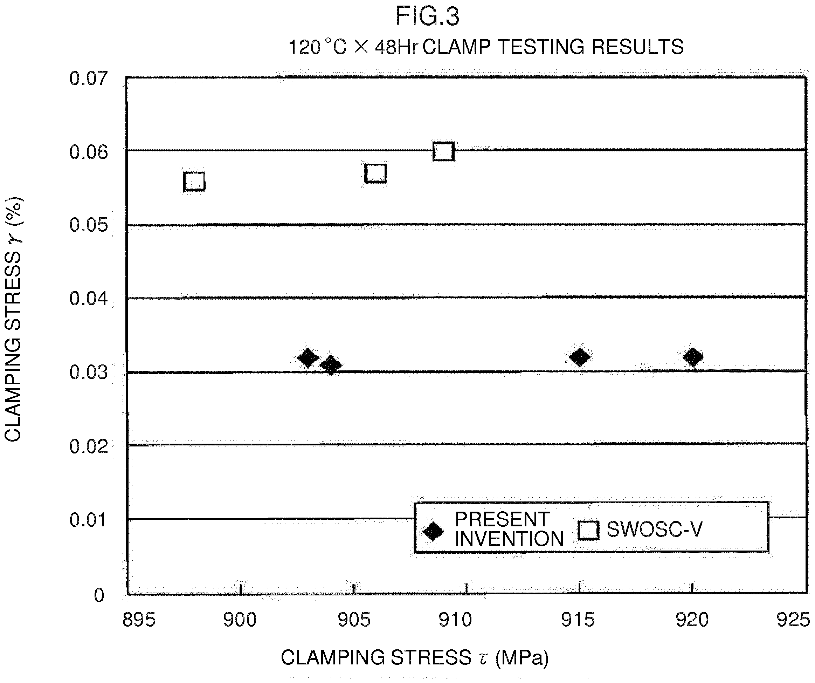

The obtained steel spring (1-1) was subjected to warm clamp testing, and residual shear strain (load loss) was measured after testing. The clamp testing was performed under conditions of 120°C for 48 hours, and the clamp stress (max shear stress) was between 895 MPa and 925 MPa, which was varied for each test. Similarly, the steel spring prepared using SWOSC-V was subjected to warm clamp testing, and the residual shear strain $\gamma$ was measured after testing. The results are illustrated in Fig. 3. Note that in Fig. 3, the steel spring (1-1) is labeled "present invention", and the steel spring prepared using SWOSC-V is labeled "SWOSC-V".

From the results in Fig. 3, it can be found that the residual shear strain $\gamma$ (sag amount) of the steel spring (1-1) (present invention) was approximately half that of the steel spring prepared using SWOSC-V (comparative example), and the steel spring (1-1) (present invention) has excellent anti-heat sagging property.

Accordingly, it can be found that the steel spring of the present invention has excellent anti-heat sagging property, and load loss in a single-operation environment is suppressed in comparison to the steel spring prepared using SWOSC-V (comparative example).

Tensile Strength Measurement

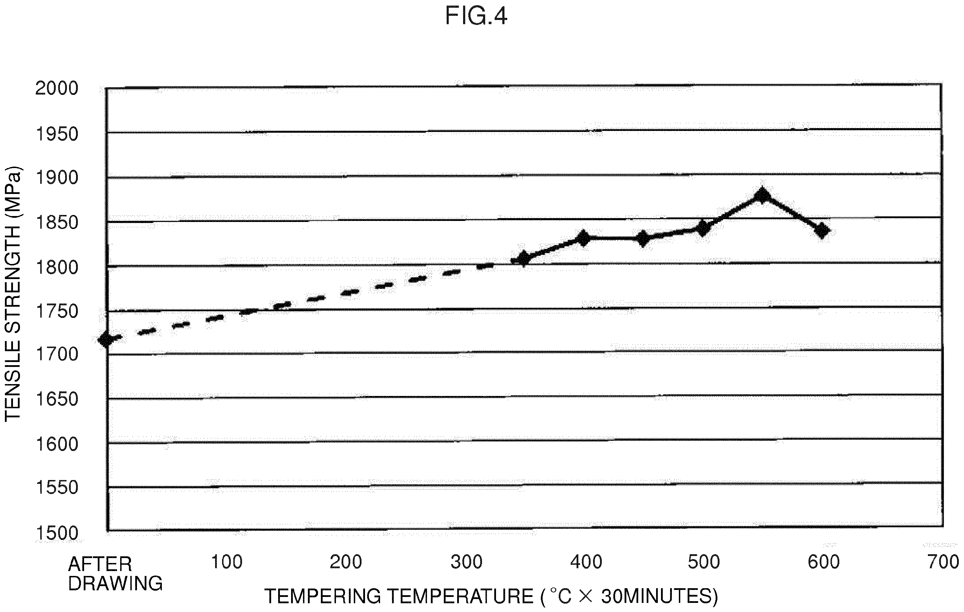

Heat-treated steel wires (1-1) to (1-6) were obtained by subjecting steel wires to heat treatment with a uniform heat treatment duration of 30 minutes, and varying the temperature (tempering temperature) as shown in table 4, prior to forming the steel wires. The tensile strength of the obtained heat treated steel wires (1-1) to (1-6) was then measured. The tensile strength of the steel wire prior to heat treatment was also measured. The test samples used for tensile strength measurement were No. 9A samples as stipulated by JIS Z 2201, and the testing method was in accordance with JIS Z 2241. Note that measurement was performed with a reference testing temperature of 20 $\pm$5°C, and a pulling rate (average stress increase rate) of 70 N/mm$^2\cdot$s or lower. The results are illustrated in Table 4 and Fig. 4.

Table 4

|  | Heat treatment temperature | Tensile strength | Notes |
|---|---|---|---|
| Steel wire prior to heat treatment | 0°C | 1,717 MPa | Reference example |
| Heat treated steel wire (1-1) | 350°C | 1,805 MPa | Comparative example |
| Heat treated steel wire (1-2) | 400°C | 1,828 MPa | Comparative example |
| Heat treated steel wire (1-3) | 450°C | 1,827 MPa | Comparative example |
| Heat treated steel wire (1-4) | 500°C | 1,838 MPa | Present invention |
| Heat treated steel wire (1-5) | 550°C | 1,875 MPa | Present invention |
| Heat treated steel wire (1-6) | 600°C | 1,835 MPa | Present invention |

It can be found from the results in Table 4 and Fig. 4 that, for a heat treatment duration of 30 minutes, the heat treated steel wires (1-4) to (1-6) in which heat treatment temperatures were from 500°C to 600°C had a greater increase in tensile strength, which was correlated to fatigue strength, than the steel wires (1-1) to (1-3) in which heat treatment temperatures were 450°C or lower. It can be found from the above that steel springs in which the heat treated steel wires (1-4) to (1-6) is employed have higher fatigue strength.

It can be found from the above that the steel spring of the present invention has excellent fatigue strength due to heat treatment for the coiled steel wire prior to nitriding under conditions of a temperature of from 500°C to 600°C, and a duration of from 20 minutes to 40 minutes.

Example 2

Steel springs (2-1) to (2-6) were prepared in the same manner as that of the steel spring (1-1) of Example 1, except that wire drawing was performed at the degree of drawing ε shown in Table 5.

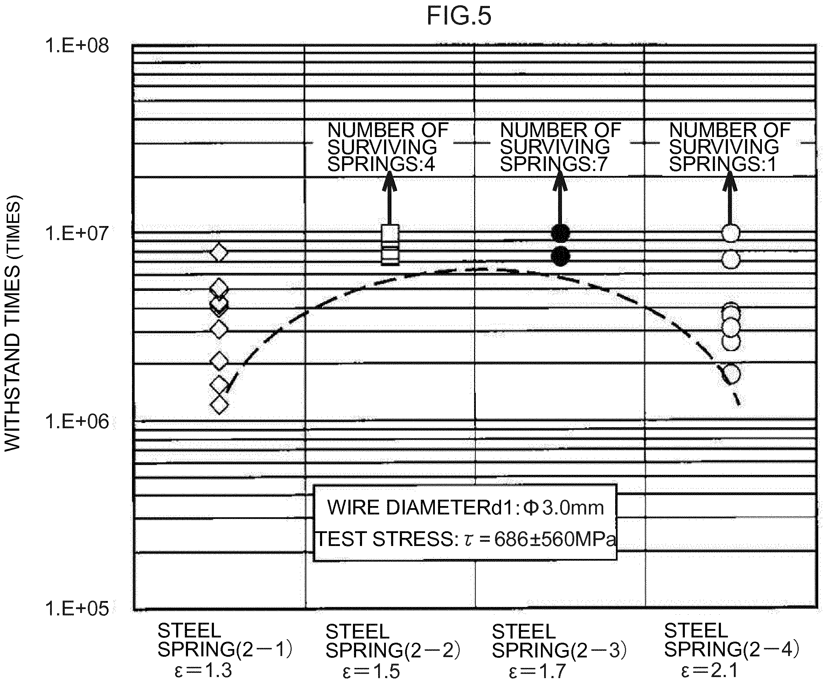

The prepared steel springs (2-1) to (2-4) were fatigue tested using a fatigue testing machine. The fatigue testing was performed for a test number of eight, at a test stress of 686 $\pm$560 MPa (average stress = 686 MPa, stress amplitude = 560 MPa). The number of repetitions (withstand times) was 10$^7$. The results are illustrated in Fig. 5.

The prepared steel springs (2-5) and (2-6) were also fatigue tested using a fatigue testing machine. The results of the withstand times (number of repetitions) before the steel springs (2-5) and (2-6) broke are shown in Table 5, together with that of the steel springs (2-1) to (2-4).

Table 5

| | Degree of drawing $\varepsilon$ | Steel wire diameter d0 prior to drawing | Steel wire diameter d1 after drawing | Right side of Equation (1) value of (-0.79 × Ln (d1) + 2.36) | Left side of Equation (1) value of (-0.79 × Ln (d1) + 2.66) | Fatigue testing (withstand times before breaking) | Notes |
|---|---|---|---|---|---|---|---|
| Steel spring (2-1) | 1.3 | 5.80 mm | 3.00 mm | 1.49 | 1.79 | 1,230,000 | Comparative example |
| Steel spring (2-2) | 1.5 | 6.40 mm | 3.00 mm | 1.49 | 1.79 | 7,050,000 | Present invention |
| Steel spring (2-3) | 1.7 | 7.00 mm | 3.00 mm | 1.49 | 1.79 | 7,520,000 | Present invention |
| Steel spring (2-4) | 2.1 | 8.60 mm | 3.00 mm | 1.49 | 1.79 | 1,760,000 | Comparative example |
| Steel spring (2-5) | 1.4 | 9.00 mm | 4.50 mm | 1.17 | 1.47 | 6,510,000 | Present invention |
| Steel spring (2-6) | 1.5 | 9.50 mm | 4.50 mm | 1.17 | 1.47 | 2,100,000 | Comparative example |

It can be found from the results in Fig. 5 and Table 5 that the steel springs (2-2) and (2-3) (present invention) that were drawn at a degree of drawing $\varepsilon$ satisfying Equation (1), and had a steel wire diameter of 3.00 mm after drawing, survived a higher number of withstand times (repetitions) before breaking than the steel springs (2-1) and (2-4) (comparative examples) that were drawn at a degree of drawing $\varepsilon$ not satisfying Equation (1).

Moreover, it can be found that the steel spring (2-5) (present invention) that was drawn at a degree of drawing $\varepsilon$ satisfying Equation (1), and had a steel wire diameter of 4.50 mm after drawing, likewise had a higher number of withstand times (repetitions) before breaking than the steel spring (2-6) (comparative example) that was drawn at a degree of drawing $\varepsilon$ not satisfying Equation (1).

It can be found from the above that the steel spring of the present invention has excellent fatigue strength due to drawing at a degree of drawing $\varepsilon$ satisfying Equation (1).

Example 3

Steel springs (3-1) to (3-6) were prepared in the same manner as that of the steel spring (1-1) of Example 1, except that the conditions of nitriding treatment were varied to form nitride layers having the thicknesses shown in Table 6. Note that the steel spring (3-1) was prepared without carrying out nitriding treatment.

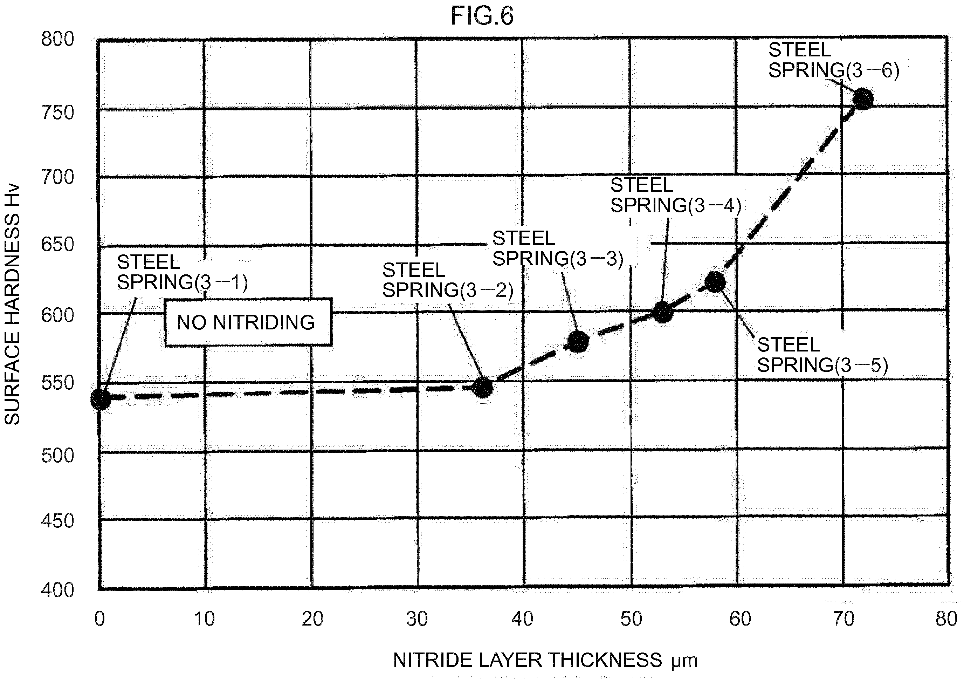

The surface hardness Hv (Vickers hardness Hv) of the prepared steel springs (3-1) to (3-6) was measured. The surface hardness Hv was measured using a micro Vickers hardness tester. The results are shown in Table 6 and Fig. 6.

The prepared steel springs (3-1) to (3-6) were also subjected to salt spray testing. In the salt spray testing, saltwater having a concentration of 5% by mass was sprayed, and rust occurrence was inspected after 500 hours. The results are shown in Table 6.

Table 6

| | Nitride layer thickness | Surface hardness Hv | Salt spray testing (rust occurrence) | Notes |
|---|---|---|---|---|
| Steel spring (3-1) | 0 μm | 539 Hv | Local occurrence | Comparative example |
| Steel spring (3-2) | 36 μm | 546 Hv | None | Comparative example |
| Steel spring (3-3) | 45 μm | 579 Hv | None | Present invention |
| Steel spring (3-4) | 53 μm | 600 Hv | None | Present invention |
| Steel spring (3-5) | 58 μm | 622 Hv | Local occurrence | Present invention |
| Steel spring (3-6) | 72 μm | 755 Hv | Occurrence around entire periphery | Comparative example |

It can be found from the results in Table 6 and Fig. 6 that surface hardness was increased in the steel springs (3-3) to (3-6) having a nitride layer thickness of 40 μm or greater. Moreover, it can be found that increase in surface hardness was not confirmed in the steel springs (3-1) and (3-2) having a nitride layer thickness of less than 40 μm.

However, it can also be found that rust occurred around the entire periphery of the steel spring (3-6) having a nitride layer thickness in excess of 60 μm, indicating a deterioration in corrosion resistance.

It can be found from the above that the steel spring of the present invention has excellent corrosion resistance and fatigue strength due to having a nitride layer having a thickness of from 40 μm to 60 μm.

Example 4

Steel spring (4-1) was prepared in the same manner as that of the steel spring (1-1) of Example 1, except that nitriding treatment was not performed, and two-stage shot peening was performed in the shot peening conditions of the shot of the first stage and the second stage described in Example 1.

Steel spring (4-2) was also prepared in the same manner as that of the steel spring (1-1) of Example 1, except that two-stage shot peening was performed in the shot peening conditions of the shot of the first stage and the second stage described in Example 1.

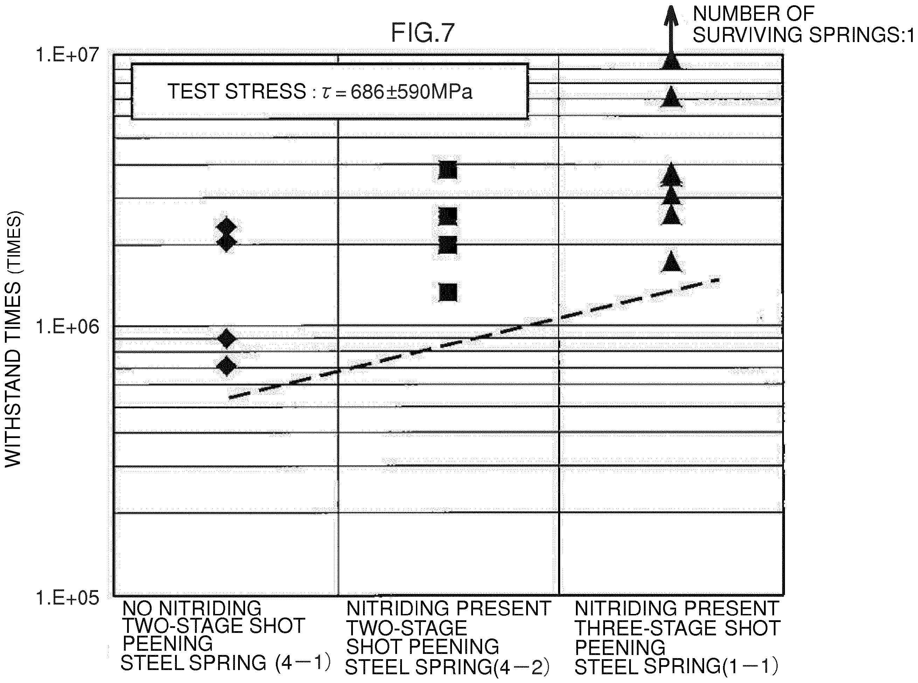

The prepared steel springs (4-1) and (4-2) were fatigue tested using a fatigue testing machine, together with the steel spring (1-1) of Example 1. The fatigue testing was performed for a test number of eight, at a test stress of 686 ±590 MPa (average stress = 686 MPa, stress amplitude = 590 MPa). The number of repetitions (withstand times) was $10^7$. The results are illustrated in Fig. 7.

From the results illustrated in Fig. 7, it can be found that the steel spring (4-2) (present invention) that was subjected to two-stage shot peening after nitriding treatment survived a higher number of withstand times (repetitions) before breaking than the steel spring (4-1) (comparative example) that was subjected to two-stage shot peening without nitriding treatment.

Moreover, it can be found that the steel spring (1-1) (present invention) that was subjected to three-stage shot peening after nitriding treatment survived a higher number of withstand times (repetitions) before breaking than the steel spring (4-2) (present invention) that was subjected to two-stage shot peening after nitriding treatment.

It can be found from the above that the steel spring of the present invention has excellent fatigue strength due to performing shot peening after nitriding treatment (namely, due to performing shot peening after forming a nitride layer).

In particular, it can be found that the steel spring of the present invention has even higher fatigue strength due to performing multi-stage shot peening after nitriding treatment.

Claims

1. A stainless steel spring manufacturing method comprising:

a process of drawing a steel wire at a degree of drawing ε satisfying Equation (1) below, the steel wire containing, in percentage by mass, C in an amount of 0.04 to 0.08%, Si in an amount of 0.3% to 2.0%, Mn in an amount of 0.5 to 3.0%, Ni in an amount of 8.0% to 10.5%, Cr in an amount of 16.0% to 22.0%, Mo in an amount of 0.5% to 3.0%, and N in an amount of 0.15% to 0.23%, with a remainder being made up of Fe and impurities; a process of forming the drawn steel wire to obtain a coiled steel wire; a process of heat treatment for the coiled steel wire under conditions of a temperature of from 500°C to 600°C, and a duration of from 20 minutes to 40 minutes; a process of nitriding the heat treated coiled steel wire under conditions of a temperature of from 400°C to 500°C and a duration of from 30 minutes to 120 minutes to form a nitride layer having a thickness of from 40 $\mu$m to 60 $\mu$m on a surface of the coiled steel wire; a process of shot peening the nitrided coiled steel wire; wherein the shot peening is multi-stage shot peening, and a process of heat treatment for the shot peened coiled steel wire under conditions of a temperature of from 200°C to 250°C and a duration of from 10 minutes to 20 minutes:

$$\text{Equation (1):} \quad -0.79 \times \text{Ln} \, (d1) + 2.36 \leq \varepsilon \leq -0.79 \times \text{Ln} \, (d1) + 2.66$$

wherein, in Equation (1), $\varepsilon$ is the degree of drawing, which is equal to Ln (d) $\times$ 2; Ln is a natural logarithm; d is d0 / d1; d0 is a wire diameter of the steel wire prior to drawing; and d1 is a wire diameter of the steel wire after drawing; and d1 is from 2.00 mm to 5.00 mm.

**Patentansprüche**

1. Herstellungsverfahren für eine Feder aus rostfreiem Stahl, enthaltend:

einen Prozess des Ziehens eines Stahldrahts mit einer die nachstehende Gleichung (1) erfüllenden Formänderung $\varepsilon$, wobei der Stahldraht in Massenprozent C in einer Menge von 0,04-0,08 %, Si in einer Menge von 0,3 % bis 2,0 %, Mn in einer Menge von 0,5-3,0 %, Ni in einer Menge von 8,0 % bis 10,5 %, Cr in einer Menge von 16,0 % bis 22,0 %, Mo in einer Menge von 0,5 % bis 3,0 % und N in einer Menge von 0,15 % bis 0,23 % enthält, wobei der Rest aus Fe und Verunreinigungen besteht; einen Prozess des Formens des gezogenen Stahldrahts, um einen gewickelten Stahldraht zu erhalten; einen Prozess der Wärmebehandlung des gewickelten Stahldrahts unter Bedingungen einer Temperatur von 500 °C bis 600 °C und einer Dauer von 20 Minuten bis 40 Minuten; einen Prozess des Nitridierens des wärmebehandelten gewickelten Stahldrahts unter Bedingungen einer Temperatur von 400 °C bis 500 °C und einer Dauer von 30 Minuten bis 120 Minuten, um eine Nitridschicht mit einer Dicke von 40 $\mu$m bis 60 $\mu$m auf der Oberfläche des gewickelten Stahldrahts zu bilden; einen Prozess des Kugelstrahlens des nitridierten gewickelten Stahldrahts, wobei das Kugelstrahlen ein mehrstufiges Kugelstrahlen ist, und einen Prozess der Wärmebehandlung des kugelgestrahlten gewickelten Stahldrahts unter Bedingungen einen Temperatur von 200 °C bis 250 °C und einer Dauer von 10 Minuten bis 30 Minuten:

$$\text{Gleichung (1):} \quad -0{,}79 \times \text{Ln}(d1) + 2{,}36 \leq \varepsilon \leq -0{,}79 \times \text{Ln}(d1) + 2{,}66$$

wobei in Gleichung (1) $\varepsilon$ die Formänderung ist, die gleich Ln(d)x2 ist; Ln ein natürlicher Logarithmus ist; d d0/d1 ist; d0 ein Drahtdurchmesser des Stahldrahts vor dem Ziehen ist; und d1 ein Drahtdurchmesser des Stahldrahts nach dem Ziehen ist; und d1 von 2,0 mm bis 5,0 mm beträgt.

**Revendications**

1. Procédé de fabrication d'un ressort en acier inoxydable comprenant :

un processus d'étirage d'un fil en acier avec un degré d'étirage $\varepsilon$ satisfaisant à l'Equation (1) ci-dessous, le fil en acier contenant, en pourcentage en masse, C en une quantité comprise entre 0,04 et 0,08 %, Si en une quantité comprise entre 0,3 % et 2,0 %, Mn en une quantité comprise entre 0,5 et 3,0 %, Ni en une quantité comprise entre 8,0 % et 10,5 %, Cr en une quantité comprise entre 16,0 % et 22,0 %, Mo en une quantité comprise entre 0,5 % et 3,0 %, et N en une quantité comprise entre 0,15 % et 0,23 %, le reste étant constitué de Fe et d'impuretés ;

un processus de formation du fil d'acier étiré pour obtenir un fil d'acier bobiné ;

un processus de traitement thermique pour le fil d'acier bobiné dans des conditions de température comprise entre 500 °C et 600 °C, et une durée comprise entre 20 minutes et 40 minutes ;

un processus de nitruration du fil d'acier bobiné ayant subi le traitement thermique dans des conditions de température comprise entre 400 °C et 500 °C et une durée comprise entre 30 minutes et 120 minutes afin de former une couche de nitrure ayant une épaisseur comprise entre 40 $\mu$m et 60 $\mu$m sur une surface du fil d'acier bobiné ;

un processus de grenaillage du fil d'acier bobiné nitruré ; dans lequel le grenaillage est un grenaillage à plusieurs degrés, et

un procédé de traitement thermique pour le fil d'acier bobiné grenaillé dans des conditions de température comprise entre 200 °C et 250 °C et une durée comprise entre 10 minutes et 20 minutes ;

$$\text{Equation (1) : } -0{,}79 \times Ln(d1) + 2{,}36 \leq \varepsilon \leq -0{,}79 \times Ln(d1) + 2{,}66$$

dans lequel, dans l'Equation (1), $\varepsilon$ est le degré d'étirage, qui est égal à $Ln(d) \times 2$ ; Ln est un logarithme naturel ; d est d0/d1 ; d0 est un diamètre de fil du fil d'acier avant l'étirage ; et d1 est un diamètre de fil du fil d'acier après l'étirage ; et d1 est compris entre 2,00 mm et 5,00 mm.

FIG.1

EP 3 187 600 B1

FIG.2

EP 3 187 600 B1

FIG.3

120°C × 48Hr CLAMP TESTING RESULTS

PRESENT INVENTION ◆ SWOSC-V □

CLAMPING STRESS $\tau$ (MPa)

CLAMPING STRESS $\gamma$ (%)

FIG.4

EP 3 187 600 B1

FIG.5

FIG.6

FIG.7

NUMBER OF SURVIVING SPRINGS:1

TEST STRESS : $\tau = 686 \pm 590$ MPa

WITHSTAND TIMES (TIMES)

1.E+07

1.E+06

1.E+05

NO NITRIDING
TWO-STAGE SHOT
PEENING
STEEL SPRING (4-1)

NITRIDING PRESENT
TWO-STAGE
SHOT PEENING
STEEL SPRING(4-2)

NITRIDING PRESENT
THREE-STAGE SHOT
PEENING
STEEL SPRING(1-1)

EP 3 187 600 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3975019 B
- JP 4080321 B
- JP 4245457 B
- JP 2007224366 A
- JP 2003231919 A
- JP 4519513 B
- JP H08281363 A
- EP 1992712 A1
- EP 1619264 A1

### Non-patent literature cited in the description

- Operational Standards for Shot Peening. Japan Spring Manufacturers Association